Europäisches Patentamt

(19) European Patent Office

Office européen des brevets

(11) Veröffentlichungsnummer: **0 020 872**
**B1**

(12) **EUROPÄISCHE PATENTSCHRIFT**

(45) Veröffentlichungstag der Patentschrift:
**15.06.83**

(21) Anmeldenummer: **80101516.5**

(22) Anmeldetag: **22.03.80**

(51) Int. Cl.³: **F 24 D 19/10,** F 24 D 3/02,
F 04 F 5/10

(54) Warmwasserheizungs- oder bereitungsanlage mit einer regelbaren Strahlpumpe und Strahlpumpe dazu.

(30) Priorität: **23.05.79 DE 2920923**

(43) Veröffentlichungstag der Anmeldung:
**07.01.81 Patentblatt 81/1**

(45) Bekanntmachung des Hinweises auf die Patenterteilung:
**15.06.83 Patentblatt 83/24**

(84) Benannte Vertragsstaaten:
**BE CH FR NL**

(56) Entgegenhaltungen:
**DE-A-2 225 263**
**DE-A-2 309 414**
**DE-C-344 248**
**FR-A-2 357 743**

(73) Patentinhaber: **Bälz, Helmut, Koepffstrasse 5,**
**D-7100 Heilbronn (DE)**

(72) Erfinder: **Bälz, Helmut, Koepffstrasse 5,**
**D-7100 Heilbronn (DE)**

(74) Vertreter: **Patentanwälte Dipl.-Ing. W. Scherrmann**
**Dr.-Ing. R. Rüger, Webergasse 3 Postfach 348,**
**D-7300 Esslingen (Neckar) (DE)**

## Warmwasserheizungs- oder -bereitungsanlage mit einer regelbaren Strahlpumpe und Strahlpumpe dazu

Die Erfindung betrifft eine Warmwasserheizungs- oder -bereitungsanlage mit einer mit ihrer Treib- und ihrer Fangdüse in der verbraucherseitigen Vorlaufleitung liegenden regelbaren Strahlpumpe, deren den Treibstrahl umgebender Saugraum mit verbraucherseitigem Rücklauf unter Beimischung einer Rücklaufmenge zu der Vorlaufmenge beaufschlagt ist, sowie eine für eine solche Warmwasserheizungs- oder -bereitungsanlage bestimmte regelbare Strahlpumpe mit einem mit Anschlüssen für die Vorlaufleitung ausgebildeten Gehäuse, das die Treibdüse und die Fangdüse enthält und den Saugraum umschließt.

Bei Warmwasserheizungs- oder -bereitungsanlagen ist es bekannt, in der Vorlaufleitung zum Verbraucher eine regelbare Strahlpumpe mit Rücklaufbeimischung vorzusehen, die den Vorteil bringt, daß die Anlage, beispielsweise bei Betrieb aus einem Fernheiznetz, keine Druckerhöhungspumpe auf der Verbraucherseite benötigt.

Eine derartige Warmwasserheizungs- oder -bereitungsanlage ist in der DE-A-2 225 263 (Figur 15) beschrieben. Die Rücklaufbeimischung erfolgt dabei in der Weise, daß an das Gehäuse der Strahlpumpe saugseitig eine Bypassleitung angeschlossen ist, die von der verbraucherseitigen Rücklaufleitung abgeht, welche ihrerseits mit der Rücklaufleitung des Fernheiznetzes verbunden ist. In der Bypassleitung können Stell- und Sicherheitsglieder angeordnet sein.

Da die Beimischung des ausgekühlten Rücklaufs zu dem Vorlauf in dem Mischraum der Strahlpumpe durch Ansaugen von Rücklauf über die Bypassleitung geschieht, besteht die Gefahr, daß der von der Strahlpumpe erzeugte Unterdruck in der als Saugleitung dienenden Bypassleitung zum Eindringen von Luft führt. Andererseits weist der den Saugraum durchquerende Treibstrahl bei größeren Differenzdrücken eine verhältnismäßig hohe Strömungsgeschwindigkeit auf, was dazu führen kann, daß in dem Saugraum ein Entgasen des angesaugten Wassers auftritt, mit dem Ergebnis, daß in dem Wasser gelöste Luft in beträchtlichem Maße freigesetzt wird. Diese Entgasung führt beim Betrieb der Strahlpumpe zu einer starken Geräuschentwicklung; sie ist außerdem häufig mit einer ungleichmäßigen Ansaugung verbunden.

Da solche Warmwasserheizungs- und -bereitungsanlagen, beispielsweise als Hausübergabestation, insbesondere auch in Wohngebäuden eingesetzt werden, ist die starke Geräuschentwicklung der Strahlpumpe unerwünscht.

Daneben ist eine Warmwasserheizungsanlage bekannt (DE-C-344 248), bei der dem Heizkessel eine eigene, von der verbraucherseitigen Vorlaufleitung unabhängige Umlaufleitung zugeordnet ist, die eine mechanisch bewegte Fördervorrichtung, beispielsweise in Gestalt einer Zentrifugalpumpe, und eine druckseitig dieser nachgeschaltete Strahlpumpe enthält, an deren Saugraum unmittelbar die verbraucherseitige Rücklaufleitung angeschlossen ist. Auf diese Weise soll erreicht werden, daß ohne zusätzliche Betriebsumschaltmittel in den Rohrleitungen die Heizanlage durch Inbetriebnahme der mechanischen Fördervorrichtung vom Schwerkraftumlaufheizbetrieb mit langsamem Heizmediumsumlauf, ohne Unterbrechung der Schwerkraftwirkung, in einen Schnellumlaufheizbetrieb überführt werden kann. Da die als nicht regelbarer 3-Wege-Strahlapparat ausgebildete Strahlpumpe nicht in der verbraucherseitigen Vorlaufleitung liegt, sondern diese unmittelbar an den Heizkessel angeschlossen ist, kann die Strahlpumpe die verbraucherseitige Vorlauftemperatur nicht beeinflussen. Die verbraucherseitige Vorlauftemperatur ist immer gleich der Temperatur, mit der das Heizmedium aus dem Heizkessel austritt. Damit ergeben sich ganz andere Betriebsbedingungen wie bei einer Heizungsanlage mit Rücklaufbeimischung zu dem verbraucherseitigen Vorlauf.

Schließlich ist auch schon eine regelbare Strahlpumpe bekannt geworden (FR-A-2 357 743), deren Gehäuse zwei einander gegenüberliegende, in den Saugraum mündende Rohrleitungsanschlüsse aufweist.

Diese Rohrleitungsanschlüsse dienen aber beide dazu, eine der Treibstrommenge beizumischende Flüssigkeit in den Saugraum einzuführen. Zu diesem Zwecke ist die Strahlpumpe dazu eingerichtet, in der zuzumischenden Flüssigkeit untergetaucht betrieben zu werden, was bei einer Warmwasserheizungs- oder Bereitungsanlage nicht infrage kommt.

Aufgabe der Erfindung ist es, eine Warmwasserheizungs- oder -bereitungsanlage der eingangs genannten Art sowie eine dafür geeignete Strahlpumpe zu schaffen, die sich durch einen geräuscharmen, gleichmäßigen und betriebssicheren Betrieb auszeichnen.

Zur Lösung dieser Aufgabe ist die Warmwasserheizungs- und -bereitungsanlage erfindungsgemäß dadurch gekennzeichnet, daß der Saugraum der Strahlpumpe unmittelbar in der verbraucherseitigen Rücklaufleitung liegt und quer zu dem Treibstrom von dem Gesamtverbraucherrücklauf durchströmt ist.

Damit wird das Eindringen von Luft in die Anlage verhindert, weil der Strahlpumpe immer mehr Wasser angeboten wird, als diese ansaugen könnte, so daß die Saugwirkung entfällt.

Um die Warmwasserheizungs- oder -bereitungsanlage mit ihrer Strahlpumpe richtig einregulieren zu können, ist es in der Regel notwendig, daß der Anlagenwiderstand an den zur Verfügung stehenden Fernheiznetzdifferenzdruck angepaßt wird. Zu diesem Zwecke kann zwischen dem Saugraum der Strahlpumpe und dem Verbraucher eine einstellbare Drosseleinrichtung in der Rücklaufleitung liegen.

Dabei hat es sich als zweckmäßig erwiesen, die Drosseleinrichtung derart auszubilden, daß in ihr eine im wesentlichen laminare Strömung aufrechterhalten ist, d. h. daß die Drosseleinrichtung nicht eine turbulente Strömung hervorruft. In besonders vorteilhafter Weise kann dies erreicht werden, wenn die Drosseleinrichtung durch ein Schlauchventil gebildet ist. In einem solchen Schlauchventil wird nämlich die Strömung nicht umgelenkt, sondern lediglich gequetscht. Turbulenzen in der Strömung sind deshalb unerwünscht, weil sie wiederum zu einer Geräuschbildung führen können.

Eine für die erwähnte neue Warmwasserheizungs- oder -beheizungsanlage geeignete Strahlpumpe ist dadurch gekennzeichnet, daß ihr Gehäuse als Kreuzventilgehäuse mit vier sich jeweils paarweise gegenüberliegenden Anschlußeinrichtungen ausgebildet ist. Für eine solche Strahlpumpe ergeben sich besonders einfache Montageverhältnisse, wenn sie eine mit dem Kreuzventilgehäuse unmittelbar verbundene, dem Saugraum vorgeschaltete Drosseleinrichtung aufweist, zu welchem Zwecke mit dem Kreuzventilgehäuse ein Schlauchventil unmittelbar verbunden sein kann.

Bei der neuen Warmwasserheizungs- oder -bereitungsanlage und der beschriebenen Strahlpumpe ist ein geräuscharmes Betriebsverhalten auch bei hohen Differenzdrücken gewährleistet, während andererseits das Kreuzventilgehäuse der Strahlpumpe einen einfachen und problemlosen Einbau der Strahlpumpe gewährleistet, bei dem es gleichgültig ist, von welcher Seite aus der Rücklauf in den Saugraum eingeführt wird.

In der Zeichnung sind Ausführungsbeispiele des Gegenstandes der Erfindung dargestellt. Es zeigen

Figur 1 eine Warmwasserheizungs- oder Bereitungsanlage gemäß der Erfindung, in schematischer Darstellung und

Figur 2 die regelbare Strahlpumpe der Warmwasserheizungs- oder Bereitungsanlage nach Figur 1, im axialen Schnitt, in einer Seitenansicht, in einem anderen Maßstab und in schematischer Darstellung.

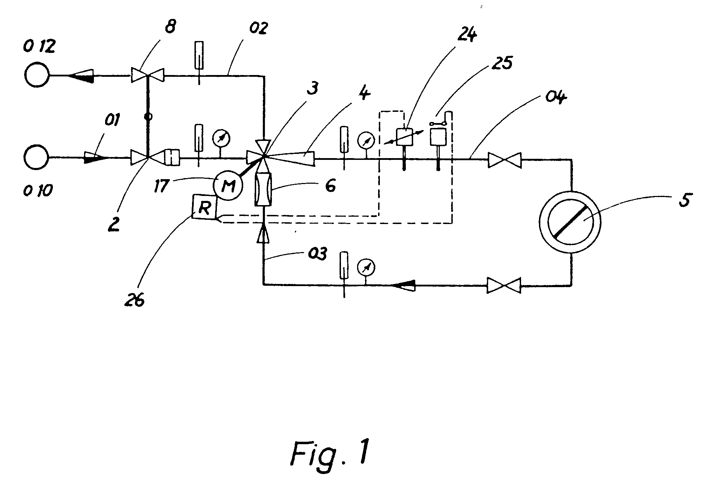

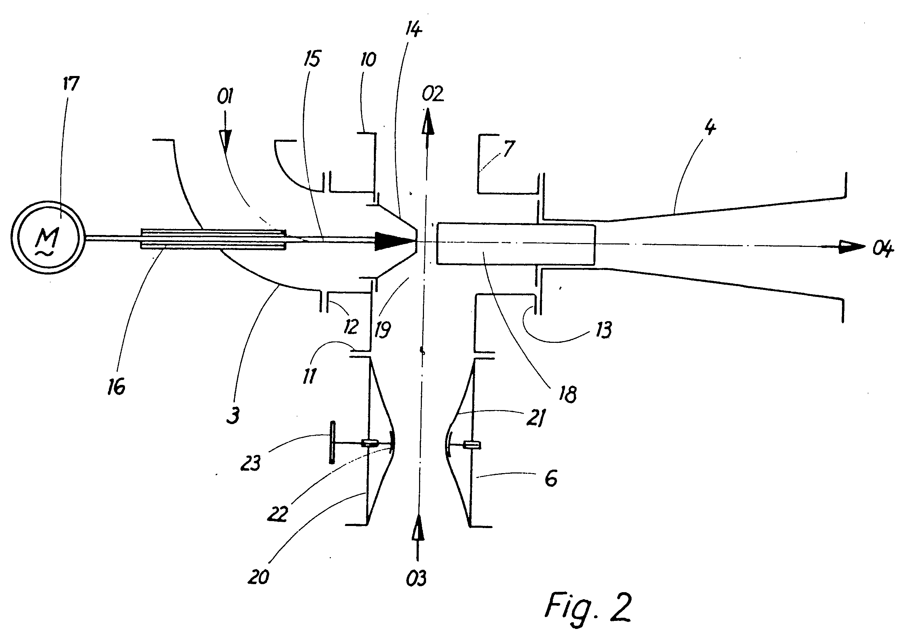

Die in Figur 1 dargestellte Warmwasserheizungs- oder -bereitungsanlage ist aus einem Fernheiznetz gespeist, dessen Vorlaufleitung mit 010 und dessen Rücklaufleitung mit 012 bezeichnet sind. An die netzseitige Vorlaufleitung 010 ist über eine ein Regelventil 2 enthaltende Leitung 01 die Treibdüse einer regelbaren Strahlpumpe 3 angeschlossen, deren Diffusor 4 mit der verbraucherseitigen Vorlaufleitung 04 verbunden ist, die zu dem Verbraucher 5 führt, dessen zugeordnete Rücklaufleitung mit 03 bezeichnet und über eine Drosseleinrichtung 6 mit dem Saugraum 19 (Figur 2) der Strahlpumpe 3 verbunden ist. Von dem Saugraum 19 der Strahlpumpe 3 geht eine Rücklaufleitung 02 ab, die über ein mit dem Regelventil 2 gekoppeltes Regelventil 8 zu der netzseitigen Rücklaufleitung 012 führt.

Wie aus Figur 2 zu ersehen, weist die Strahlpumpe 3 ein als Kreuzventilgehäuse ausgebildetes Gehäuse 7 auf, das mit vier einander jeweils paarweise gegenüberliegenden Anschlußflanschen 10, 11 und 12, 13 versehen ist, deren Achsen rechtwinklig aufeinander stehen und von denen der Anschlußflansch 12 mit der Vorlaufleitung 01 und der Anschlußflansch 13 mit dem Diffusor 4 verbunden ist. In den dem Anschlußflansch 12 zugeordneten Durchlaß des Kreuzventilgehäuses 7 ist eine Teibdüse 14 eingesetzt, deren wirksamer Durchtrittsquerschnitt durch eine Düsennadel 15 veränderlich ist, die bei 16 drehbar gelagert und durch einen Stellmotor 17 verstellbar ist.

Der Treibdüse 14 gegenüberliegend ist in den dem Anschlußflanschen 13 zugeordneten Durchlaß des Kreuzventilgehäuses 7 eine Fangdüse 18 eingesetzt, die den aus der Treibdüse 14 austretenden Treibstrahl aufnimmt. Der den Treibstrahl umgebende Raum in dem Kreuzventilgehäuse 7 bildet den Saugraum 19, welcher über den Anschlußflansch 10 mit der Rücklaufleitung 02 und über den gegenüberliegenden Anschlußflansch 11 mit der Drosseleinrichtung 6 verbunden ist. Der Saugraum 19 ist somit quer zu dem Treibstrom von dem über die verbraucherseitige Rücklaufleitung 03 zugeführten Rücklauf durchströmt.

Die Drosseleinrichtung 6 ist in Gestalt eines Schlauchventiles ausgebildet, das im wesentlichen aus einem zylindrischen Gehäuse 20 besteht, in das ein elastischer Schlauch 21 koaxial eingefügt ist, der endseitig flüssigkeitsdicht mit dem Gehäuse 20 verbunden ist. Auf den elastischen Schlauch 21 wirkt etwa in der Mitte zwischen den beiden endseitigen Einspannstellen ein ringförmiges Stellglied 22, dessen Durchmesser durch ein Stellorgan 23 von außen verändert werden kann.

Wie aus Figur 2 zu entnehmen, kann durch entsprechende Betätigung des Stellorganes 23 der wirksame Durchtrittsquerschnitt des Schlauchventiles 6 verändert werden, ohne daß dadurch abrupte Durchmesseränderungen im Bereiche der Wandungen des Ventiles hervorgerufen würden, die zu Turbulenzen in der Strömung führen könnten. Die durch das Schlauchventil 6 bewirkte Drosselung erfolgt deshalb unter Aufrechterhaltung laminarer Strömungsverhältnisse.

Das Schlauchventil 6 ist mit dem Kreuzventilgehäuse 7 der Strahlpumpe 3 unmittelbar verbunden, so daß das Ganze eine Einheit bildet, die gemeinsam montiert werden kann. Dabei ist es grundsätzlich gleichgültig, ob das Schlauchventil 6 an dem Anschlußflansch 11 oder an dem anderen Anschlußflansch 10 angeordnet ist, d. h. ob der Saugraum 19 in der einen oder anderen Richtung durchströmt ist.

Bei der Warmwasserheizungs- oder -bereitungsanlage nach Figur 1 ist somit die regelbare Strahlpumpe 3 mit dem netzseitigen Vordruck an der Treibdüse 14 beaufschlagt; sie baut diesen Vordruck auf einen für den Verbraucher 5 zweckmäßigen Wert in der verbraucherseitigen Vorlaufleitung 04 ab. Das die Drosseleinrichtung bildende Schlauchventil 6 in der verbraucherseitigen Rücklaufleitung 03, das somit zwischen der Strahlpumpe 3 und dem Verbraucher 5 liegt, ist so eingestellt, daß sich ein für die Strahlpumpe 3 günstiger Wert des Anlagenwiderstandes ergibt.

Dadurch, daß der Saugraum 19 der Strahlpumpe 3 unmittelbar in der verbraucherseitigen Rücklaufleitung 03 – 02 liegt und damit von dem gesamten Rücklauf zwangsläufig durchströmt ist, wird erreicht, daß in der verbraucherseitigen Rücklaufleitung 03 und auch in dem Saugraum 19 der Strahlpumpe 3 kein Unterdruck auftreten kann, der zu einem Ansaugen von über Undichtigkeiten zuströmender Luft oder zu einem Entgasen des Wassers führen kann. Die Strahlpumpe 3 arbeitet deshalb auch bei hohen Druckdifferenzen mit sehr geringer Geräuschentwicklung und ohne Beeinträchtigung der Strömungsverhältnisse durch plötzlich freigesetzte Lufteinschlüsse. Die Ausbildung der Drosseleinrichtung in Gestalt des Schlauchventiles 6 gewährleistet, daß keine Turbulenzen bei der Drosselung auftreten, die wiederum zu einer Geräuschentwicklung führen könnten.

Die Strahlpumpe 3 ist in Abhängigkeit von Regelgrößen des verbraucherseitigen Vorlaufs geregelt. Zu diesem Zwecke liegt beispielsweise in der Vorlaufleitung 04 ein Temperaturfühler 24, dem der Fühler eines Druckschalters 25 nachgeschaltet ist und der gemeinsam mit diesem Meßsignale auf einen Regler 26 gibt, welcher seinerseits den Stellmotor 17 der Strahlpumpe 3 in an sich bekannter Weise derart beeinflußt, daß ein bestimmter Sollwert der Temperatur in der verbraucherseitigen Vorlaufleitung 04 eingeregelt wird. Bei einem unzulässigen Druckanstieg in der verbraucherseitigen Vorlaufleitung 04 gibt der Druckschalter 25 ein Signal auf den Regler 26, das bewirkt, daß der Stellmotor 17 die Treibdüse 14 verschließt.

Die in Figur 2 dargestellte regelbare Strahlpumpe kann grundsätzlich naturgemäß nicht nur in Warmwasserheizungs- oder -bereitungsanlagen sondern immer dann eingesetzt werden, wenn es darum geht, einen geräuscharmen Betrieb einer in einem geschlossenen Kreislauf arbeitenden regelbaren Strahlpumpe zu erzielen.

**Patentansprüche:**

1. Warmwasserheizungs- oder -bereitungsanlage mit einer mit ihrer Treib- und ihrer Fangdüse (14; 18) in der verbraucherseitigen Vorlaufleitung (04) liegenden regelbaren Strahlpumpe (3), deren den Treibstrahl umgebender Saugraum (19) mit verbraucherseitigem Rücklauf unter Beimischung einer Rücklaufmenge zu der Vorlaufmenge beaufschlagt ist, dadurch gekennzeichnet, daß der Saugraum (19) der Strahlpumpe (3) unmittelbar in der verbraucherseitigen Rücklaufleitung (03, 02) liegt und quer zu dem Treibstrom von dem Gesamtverbraucherrücklauf durchströmt ist.

2. Warmwasserheizungs- oder -bereitungsanlage nach Anspruch 1, dadurch gekennzeichnet, daß zwischen dem Saugraum (19) der Strahlpumpe (3) und dem Verbraucher (5) eine einstellbare Drosseleinrichtung (6) in der Rücklaufleitung (03) liegt.

3. Warmwasserheizungs- oder -bereitungsanlage nach Anspruch 2, dadurch gekennzeichnet, daß in der Drosseleinrichtung (6) eine im wesentlichen laminare Strömung aufrechterhalten ist.

4. Warmwasserheizungs- oder -bereitungsanlage nach Anspruch 3, dadurch gekennzeichnet, daß die Drosseleinrichtung durch ein Schlauchventil (6) gebildet ist.

5. Regelbare Strahlpumpe für eine Warmwasserheizungs- oder -bereitungsanlage nach einem der vorhergehenden Ansprüche, mit einem mit Anschlüssen für die Vorlaufleitung ausgebildeten Gehäuse, das die Treibdüse (14) und die Fangdüse (18) enthält und den Saugraum umschließt, dadurch gekennzeichnet, daß das Gehäuse als Kreuzventilgehäuse (7) mit vier sich jeweils paarweise gegenüberliegenden Anschlußeinrichtungen (10, 11; 12, 13) ausgebildet ist.

6. Strahlpumpe nach Anspruch 5, dadurch gekennzeichnet, daß sie eine mit dem Kreuzventilgehäuse (7) unmittelbar verbundene, dem Saugraum (19) vorgeschaltete Drosseleinrichtung (6) aufweist.

7. Strahlpumpe nach Anspruch 6, dadurch gekennzeichnet, daß mit dem Kreuzventilgehäuse (7) ein Schlauchventil (6) unmittelbar verbunden ist.

**Claims**

1. The hot water heating or boiler system, having a controllable jet pump (3) the driving and receiving nozzles (14; 18) of which are arranged in the consumer feed pipe (04), the suction chamber (19) of said jet pump which surrounds the driving jet being pressurized by the consumer return flow while a return flow portion is admixed to the feed flow, characterized in that the suction chamber (19) of the jet pump (3) is arranged immediately in the consumer return pipe (03, 02) and that the total consumer return flow is flowing through said suction chamber transversally to the driving stream.

2. The hot water heating or boiler system according to claim 1, characterized in that an adjustable throttle device (6) is arranged in the return pipe (03) between the suction chamber (19) of the jet pump (3) and the consumer (5).

3. The hot water heating or boiler system according to claim 2, characterized in that an essentially laminar flow is maintained in the throttle device (6).

**0 020 872**

4. The hot water heating or boiler system according to claim 3, characterized in that the throttle device is constituted by a hose valve (6).

5. The adjustable jet pump for a hot water heating or boiler system according to any one of the preceding claims, having a housing with connecting pieces for the feed pipe, said housing containing the driving nozzle (14) and the receiving nozzle (18) and enclosing the suction chamber, characterized in that the housing is designed as crossing valve housing (7) having four connecting means (10, 11; 12, 13) which are oppositely arranged in pairs, respectively.

6. The jet pump according to claim 5, characterized in that it is provided with a throttle device (6) which is directly connected to the crossing valve housing (7) and arranged upstream of the crossing valve housing (19).

7. The jet pump according to claim 6, characterized in that a hose valve (6) is directly connected to the crossing valve housing (7).

**Revendications**

1. Installation de chauffage à eau chaude ou de préparation d'eau chaude avec un éjecteur (3) réglable disposé dans la conduite d'arrivée (04) côté utilisateur avec sa tuyère et sa buse collectrice (14; 18), dont la chambre d'aspiration (19) traversée par le jet reçoit le courant de retour côté utilisateur pour mélanger une quantité du courant de retour avec une quantité du courant d'arrivée, caractérisée en ce que la chambre d'aspiration (19) de l'éjecteur (3) se trouve directement dans la conduite de retour (03, 02) côté utilisateur et est traversée par tout le courant de retour de l'utilisateur perpendiculairement au jet.

2. Installation de chauffage à eau chaude ou de préparation d'eau chaude selon la revendication 1, caractérisée en ce qu'un dispositif d'étranglement (6) réglable se trouve dans la conduite de retour (03) entre la chambre d'aspiration (19) et l'utilisateur (5).

3. Installation de chauffage à eau chaude ou de préparation d'eau chaude selon la revendication 2, caractérisée en ce que le dispositif d'étranglement (6) maintient un écoulement essentiellement laminaire.

4. Installation de chauffage à eau chaude ou de préparation d'eau chaude selon la revendication 3, caractérisée en ce que le dispositif d'étranglement est constitué par un robinet à tuyau (6).

5. Ejecteur réglable pour une installation selon l'une des revendications précédentes avec un carter réalisé avec un raccord pour la conduite d'arrivée contenant la tuyère (14) et la buse collectrice (18) et enfermant la chambre d'aspiration, caractérisé en ce que le carter est réalisé comme un carter de vanne cruciforme (7) avec quatre dispositifs de raccordement (10, 11; 12, 13) opposés par paires.

6. Ejecteur selson la revendication 5, caractérisé en ce qu'il comporte un dispositif d'étranglement (6) branché devant la chambre d'aspiration (19), assemblé directement avec le carter de vanne cruciforme (7).

7. Ejecteur selon la revendication 6, caractérisé en ce qu'un robinet à tuyau (6) est assemblé directement avec le carter cruciforme.

Fig. 1

Fig. 2

0020872